(19) Europäisches Patentamt
European Patent Office
Office européen des brevets

(11) **EP 2 919 159 A2**

(12) **EUROPEAN PATENT APPLICATION**

(43) Date of publication:
16.09.2015 Bulletin 2015/38

(51) Int Cl.:
***G06K 9/00*** *(2006.01)*

(21) Application number: 15158323.4

(22) Date of filing: 10.03.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 12.03.2014 JP 2014049456

(71) Applicant: **Toyota Jidosha Kabushiki Kaisha Toyota-shi, Aichi-ken 471-8571 (JP)**

(72) Inventor: **Shimizu, Hiroaki TOYOTA-SHI, AICHI-KEN, 471-8571 (JP)**

(74) Representative: **Intès, Didier Gérard André et al Cabinet Beau de Loménie 158, rue de l'Université 75340 Paris Cedex 07 (FR)**

(54) **Image processing device and image processing method**

(57)     An image processing device (100) includes an imaging device (2), a first extraction unit (5), a disparity calculation unit (4), a second extraction unit (8), and an object determination unit (9). The first extraction unit extracts a main area based on image data captured by the imaging device, the main area being an image area including a candidate for a target. The second extraction unit extracts a candidate area from the main area based on the disparity. The object determination unit determines whether an image of the candidate area is an image of the target. An extraction of the candidate area from a lower part area is restricted more strictly than that from an upper part area. The lower part area is provided below a predetermined position in the main area. The upper part area is provided above the predetermined position in the main area.

FIG. 10

**Description**

BACKGROUND OF THE INVENTION

1. Field of the Invention

The present invention relates to an image processing device and an image processing method.

2. Description of Related Art

Conventionally, there is a technology that detects a particular object such as a human face based on the disparity. For example, Japanese Patent Application Publication No. 2007-280088 (JP 2007-280088 A) discloses a technology that generates a depth map based on the disparity between two images, sets a detection area of a size corresponding to a distance value in the depth map, and determines whether the object in the detection area is a human face.

It is desired to reduce a reduction in accuracy when extracting a target based on the disparity of image data captured by an imaging device. For example, when the difference between the distance from the imaging device to a desired target and the distance from the imaging device to the background is small, the disparity value becomes small. This reduction in disparity, in turn, reduces the extraction accuracy when the target area is extracted from the image data. When the contour is extracted from a wider range using the disparity information including not only the face but also the body and legs of a person, the extraction target includes a part where the distance to the background is short and a part where the distance to the background is long. In the part where the distance to the background is short, the difference between the disparity value obtained from the image data in that part and the disparity value obtained from the image data in the nearby background position becomes small, sometimes reducing the separation/extraction accuracy. This reduction tends to increase the divergence between the extracted shape and the real shape of the target in the part where the distance to the background is short. Therefore, when comparison such as pattern matching is performed based on the extracted shape, the accuracy of pattern matching is reduced if the divergence between the extracted shape and the real shape is large.

SUMMARY OF THE INVENTION

The present invention provides an image processing device and an image processing method that can increase the extraction accuracy when the area of a target is extracted from image data based on the disparity.

An image processing device according to a first aspect of the present invention includes an imaging device, a first extraction unit, a disparity calculation unit, a second extraction unit, and an object determination unit. The imaging device is configured to capture an image of surroundings. The first extraction unit is configured to extract a main area, which is an image area including a candidate for a target, based on image data captured by the imaging device. The disparity calculation unit is configured to calculate a disparity based on image data captured by the imaging device. The second extraction unit is configured to extract a candidate area, which is an image area of the candidate, from the main area based on the disparity. The object determination unit is configured to determine whether an image of the candidate area is an image of the target by comparing a shape of the candidate area and a predetermined shape of the target. An extraction of the candidate area from a lower part area in the main area is restricted more strictly than an extraction of the candidate area from an upper part area in the main area. The lower part area constitutes a lower part of the main area and is provided below a predetermined position in the main area. The upper part area constitutes an upper part of the main area and is provided above the predetermined position in the main area.

The image processing device according to the first aspect of the present invention achieves the effect that the extraction accuracy for extracting the area of a target from image data based on the disparity is increased.

In the image processing device described above, the predetermined position may be a position that is set as a reference position.

The image processing device according to the first aspect of the present invention may further include a distance identification unit configured to identify a distance from the imaging device to the candidate for the target.

In the image processing device described above, in the main area, the reference position when the distance identified by the distance identification unit is large may be set above the reference position when the distance is small.

In the image processing device according to the first aspect of the present invention, a degree of restriction on the extraction of the candidate area from the lower part area when the distance identified by the distance identification unit is large may be set higher than a degree of restriction on the extraction of the candidate area from the lower part area when the distance is small.

In the image processing device described above, the second extraction unit may be configured to extract only a part of the main area as the candidate area. In the part of the main area, the distance between the candidate for the target and the imaging device is within a predetermined range with respect to the distance identified by the distance identification unit. In addition, the predetermined range of the lower part area may be smaller than the predetermined range of the upper part area.

In the image processing device according to the first aspect of the present invention, a degree of divergence between the predetermined range of the lower part area in the main area and the predetermined range of the upper part area may be larger when the distance identified by the distance identification unit is large than when the distance is small.

In the image processing device according to the first aspect of the present invention, the extraction of the candidate area may be inhibited in the lower part area.

In the image processing device according to the first aspect of the present invention, the second extraction unit may be configured to extract a part of the main area as the candidate area. In the part of the main area, the distance between the candidate for the target and the imaging device is within a predetermined range with respect to the distance identified by the distance identification unit. In addition, an extraction of the candidate area may be inhibited in the lower part area.

An image processing method according to a second aspect of the present invention includes: capturing an image of surroundings to generate image data; extracting a main area, which is an image area including a candidate for a target, based on the image data; calculating a disparity based on the image data; extracting a candidate area, which is an image area of the candidate, from the main area based on the disparity; determining whether an image of the candidate area is an image of the target by comparing a shape of the candidate area and a predetermined shape of the target; and restricting the extraction of the candidate area from a lower part area in the main area more strictly than an extraction of the candidate area from an upper part area in the main area. The lower part area constitutes a lower part of the main area and is provided below a predetermined position in the main area. The upper part area constitutes an upper part of the main area and is provided above the predetermined position in the main area.

The image processing method according to the second aspect of the present invention achieves the effect that the extraction accuracy for extracting the area of a target from image data based on the disparity is increased.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a flowchart showing an operation of an image processing device in a first embodiment;
FIG. 2 is a block diagram of the image processing device in the first embodiment;
FIG. 3 is a perspective view of a vehicle in the first embodiment;
FIG. 4 is a diagram showing an example of a method for calculating the disparity;

FIG. 5 is a diagram showing a main area;
FIG. 6 is a diagram showing a problem with the extraction method based on the disparity;
FIG. 7 is a diagram showing an extraction permission area;
FIG. 8 is a diagram showing a determination method of an extraction area;
FIG. 9 is a diagram showing an extraction method of a candidate area;
FIG. 10 is a diagram showing an example of the candidate area;
FIG. 11 is a diagram showing a determination method of an extraction permission area in a modification of the first embodiment;
FIG. 12 is a diagram showing an extraction method of a candidate area in a second embodiment;
FIG. 13 is a diagram showing an extraction method of a candidate area in a first modification of the second embodiment; and
FIG. 14 is a diagram showing an extraction method of a candidate area in a second modification of the second embodiment.

DETAILED DESCRIPTION OF EMBODIMENTS

An image processing device and an image processing method in embodiments of the present invention are described below in detail with reference to the drawings. The embodiments below are not intended to limit the scope of the present invention. Elements described in the embodiments include their variations readily thought of by those skilled in the art and substantially equivalent elements.

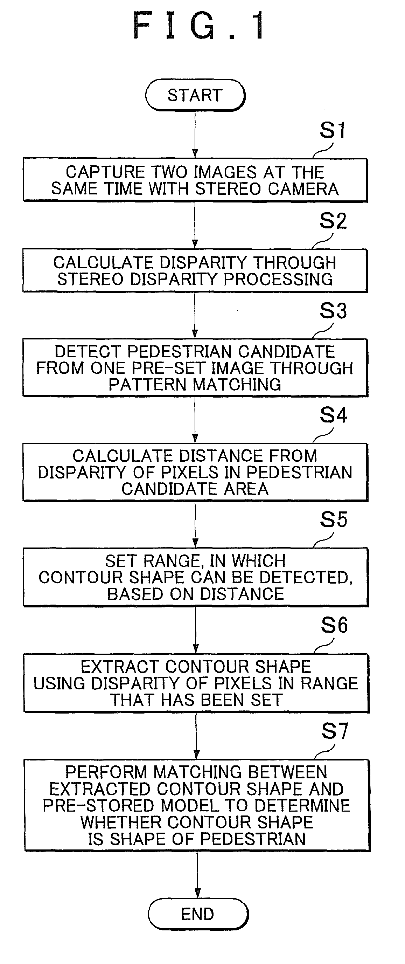

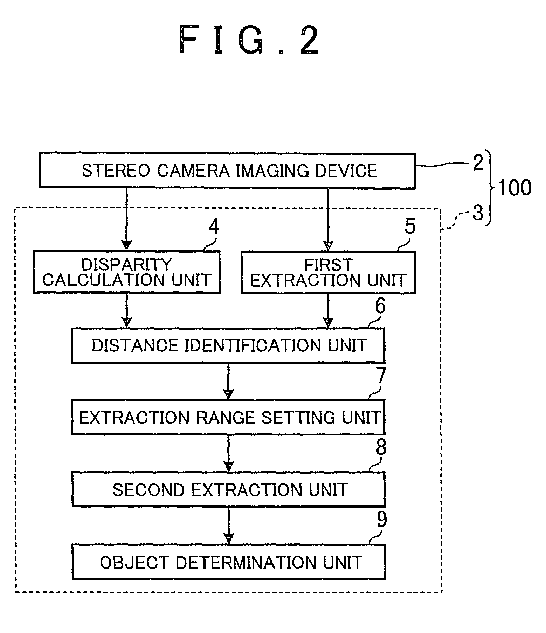

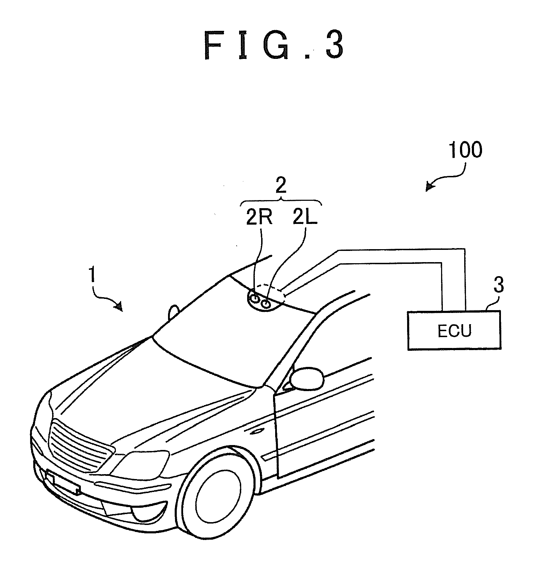

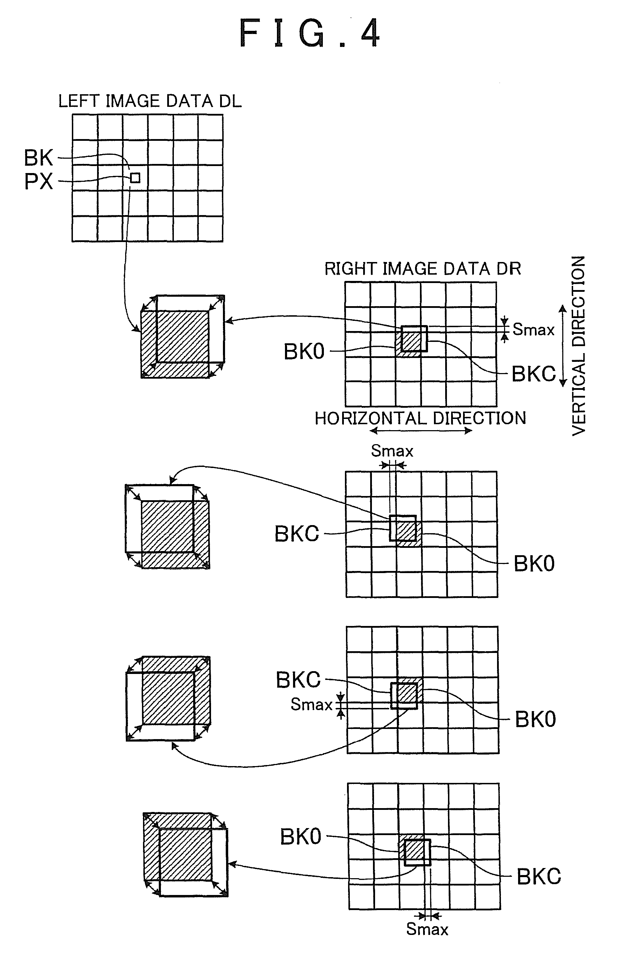

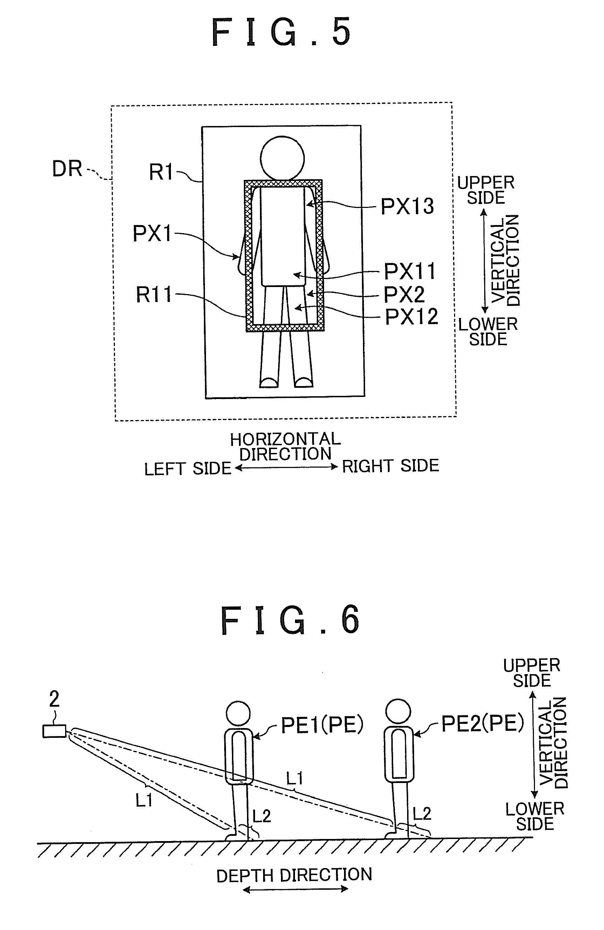

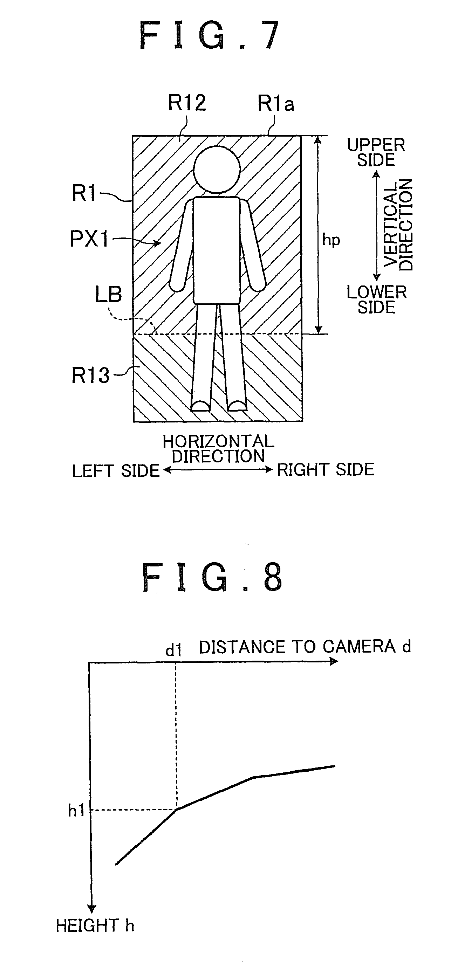

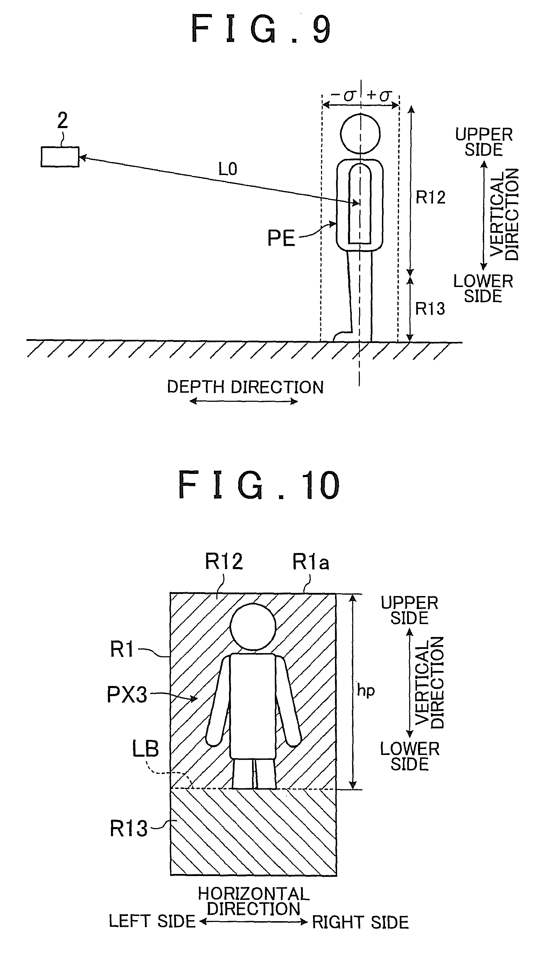

[First embodiment] A first embodiment is described below with reference to FIG. 1 to FIG. 10. This embodiment relates to an image processing device and an image processing method. FIG. 1 is a flowchart showing an operation of an image processing device in the first embodiment of the present invention, FIG. 2 is a block diagram of the image processing device in the first embodiment, FIG. 3 is a perspective view of a vehicle in the first embodiment, FIG. 4 is a diagram showing an example of a method for calculating the disparity, FIG. 5 is a diagram showing a main area, FIG. 6 is a diagram showing a problem with the extraction method based on the disparity, FIG. 7 is a diagram showing an extraction permission area, FIG. 8 is a diagram showing a determination method of an extraction area, FIG. 9 is a diagram showing an extraction method of a candidate area, and FIG. 10 is a diagram showing an example of the candidate area.

As shown in FIG. 2, an image processing device 100 in this embodiment includes a stereo camera imaging device 2 and an ECU 3. This embodiment describes a case in which the image processing device 100, mounted on a vehicle 1 as shown in FIG. 3, functions as an obstacle detection device that detects an obstacle around the vehicle 1. The stereo camera imaging device 2 is an imaging device that captures the image of the surroundings of the vehicle 1. The stereo camera imaging device 2 in this embodiment captures the image of the area in front of the vehicle 1. The stereo camera imaging device 2 is arranged, for example, near the windshield in the vehicle interior.

As shown in FIG. 3, the stereo camera imaging device 2 has two cameras: camera 2R and camera 2L. In this embodiment, a right-side camera 2R and a left-side camera 2L are each an independent imaging device. Each of the cameras 2R and 2L has a photoelectric conversion device such as a CCD or CMOS. The two cameras 2R and 2L capture the image of the area in front of the vehicle 1 in the horizontal direction. The two cameras 2R and 2L are arranged in different positions in the vehicle width direction of the vehicle 1. The right-side camera 2R is arranged relatively on the right side in the vehicle width direction with respect to the left-side camera 2L. The two cameras 2R and 2L are arranged in such a way that the optical axis of the right-side camera 2R and the optical axis of the left-side camera 2L are parallel.

Each of the right-side camera 2R and the left-side camera 2L is connected to the ECU 3. The image data captured by the cameras 2R and 2L is output to the ECU 3. The ECU 3 has the function as an image-processing device that processes the image data captured by the stereo camera imaging device 2. The ECU 3 is an electronic control unit that includes a computer. The ECU 3 sends an imaging command to the right-side camera 2R and the left-side camera 2L at a predetermined time interval. It is desirable that the capturing times be synchronized between the right-side camera 2R and the left-side camera 2L. The ECU 3 acquires image data captured and generated by the cameras 2R and 2L in response to the imaging command.

As shown in FIG. 2, the ECU 3 includes a disparity calculation unit 4, a first extraction unit 5, a distance identification unit 6, an extraction range setting unit 7, a second extraction unit 8, and an object determination unit 9. The disparity calculation unit 4 calculates the disparity based on the image data captured by the imaging device. The disparity calculation unit 4 in this embodiment calculates the disparity based on a plurality of pieces of image data captured by the stereo camera imaging device 2. The disparity calculation unit 4 in this embodiment calculates the disparity based on the two pieces of image data, that is, right image data and left image data. The "right image data" is image data captured and generated by the right-side camera 2R. The "left image data" is image data captured and generated by the left-side camera 2L. Because the two cameras 2R and 2L are arranged in different positions in the vehicle width direction, the disparity is generated between the right image data and the left image data. The disparity calculation unit 4 calculates this disparity.

An example of the disparity calculation method is described with reference to FIG. 4. The disparity calculation unit 4 calculates the disparity generated in the pixels, in which the same imaging object is captured, based on the correlation between the right image data DR and the left image data DL. More specifically, for a pixel PX that is a pixel in the left image data DL and is the target (hereinafter called simply "target pixel"), the disparity calculation unit 4 selects a pixel block of a predetermined size, with the target pixel PX as its center, as the source block BK. The disparity calculation unit 4 calculates the degree of correlation between the selected source block BK and the comparison target block BKC in the right image data DR.

In FIG. 4, the corresponding block BK0 in the right image data DR is a block that corresponds to the source block BK in the left image data DL. In other words, the corresponding block BK0 is a block the position of which in the image data is the same as that of the source block BK. The disparity calculation unit 4 calculates the degree of correlation in position between the comparison target block BKC, which is shifted in the vertical direction or horizontal direction with respect to the source block BK0, and the source block BK. The "vertical direction" mentioned here refers to the vertical direction of the imaging object in the image data, and the "horizontal direction" mentioned here refers to the horizontal direction of the imaging object in the image data. In this embodiment, the vertical direction of the image data DR and DL is the same as the vertical direction of the image data shown in FIG. 4, and the horizontal direction of the image data DR and DL is the same as the horizontal direction of the image data shown in FIG. 4.

The disparity calculation unit 4 calculates the degree of correlation between the comparison target block BKC, which is shifted various shift amounts from the corresponding block BK0, and the source block BK. For example, the disparity calculation unit 4 shifts the comparison target block BKC in the horizontal direction or the vertical direction, one pixel at a time, and calculates the degree of correlation each time the comparison target block BKC is shifted. After that, the disparity calculation unit 4 calculates the disparity of the target pixel PX based on the comparison target block BKC that has the highest degree of correlation with the source block BK. For example, the disparity calculation unit 4 calculates the difference in the brightness of each corresponding pixels between the source block BK and the comparison target block BKC and calculates the sum (or the sum of squares) of the brightness differences. The smaller the calculated sum of brightness differences is, the higher the degree of correlation between the source block BK and the comparison target block BKC is.

The disparity calculation unit 4 determines the comparison target block BKC with the highest degree of correlation with the source block BK, and determines the shift amount, by which the comparison target block BKC is shifted from the corresponding block BK0, to be the disparity of the target pixel PX. The maximum shift amount Smax for shifting the comparison target block BKC from the corresponding block BK0 is determined in advance.

The disparity calculation unit 4 may calculate the disparity using the method described in H.Hirschmuller,"Accurate and efficient stereo processing by semi-global matching and mutual information",CVPR,2005,pp.807-814.

The first extraction unit 5 extracts a main area (see the symbol R1 in FIG. 5), which is the image area including a target candidate, based on the image data captured by the stereo camera imaging device 2. In this embodiment, an example is described in which the target to be detected is a pedestrian. Therefore, in this embodiment, a "target candidate" is a candidate for a pedestrian to be detected. The target candidate, an object extracted based on the image data DR and DL, is an object to be determined, through pattern matching, whether the object is actually a pedestrian.

The first extraction unit 5 extracts the main area R1 based on the brightness of the pixels of the image data DR and DL. The first extraction unit 5 in this embodiment extracts the main area R1 based on one of the right image data DR and the left image data DL. To extract the main area R1, the first extraction unit 5 first extracts a pixel area PX1 which is an area included in the right image data DR and the brightness of which is largely different from that of its surrounding. The first extraction unit 5 matches the contour shape of the extracted block of the captured pixel area PX1 with the pedestrian's contour shape, stored in advance, to determine whether the image of the pixel area PX1 is an image generated by capturing a pedestrian.

The first extraction unit 5 may extract a pedestrian based on the brightness using the method described in N.DalalandB.Triggs,"Histogram of oriented gradient for human detection",CVPR,2005.

If the degree of correlation between the contour shape of the pixel area PX1 and the contour shape of the pedestrian is high, the first extraction unit 5 temporarily determines that the image of the pixel area PX1 is the image of a pedestrian. In addition, as will be described later in this embodiment, the extraction condition is adjusted for the pixel area PX1, which is temporarily determined as the pixel area of a pedestrian, based on the position in the height direction. The image processing device 100 extracts the final candidate area for pattern matching based on the adjusted extraction condition.

After the image in the pixel area PX1 is temporarily determined as the image of a pedestrian, the first extraction unit 5 extracts the main area R1. The main area R1 is extracted so that the pixel area PX1 is included as shown in FIG. 5. It is desirable that the upper end of the main area R1 be above the upper end of the pixel area PX1. It is also desirable that the lower end of the main area R1 be below the lower end of the pixel area PX1. It is desirable that the left end of the main area R1 be on the left side of the left end of the pixel area PX1. It is also desirable that the right end of the main area R1 be on the right side of the right end of the pixel area PX1.

The main area R1 may be defined as an area in which a predetermined width (for example, several tens of centimeters) of an image outside the pedestrian candidate can be captured. Note that the shape of the outer frame of the main area R1 is not limited to the rectangle shown in FIG. 5.

The distance identification unit 6 identifies the distance from the stereo camera imaging device 2 to the target candidate based on the image data captured by the stereo camera imaging device 2. The distance identification unit 6 in this embodiment calculates the distance based on the disparity calculated by the disparity calculation unit 4. In this embodiment, the distance identification unit 6 sets a distance calculation area R11 in the main area R1. The distance identification unit 6 calculates the distance between the stereo camera imaging device 2 and the target candidate based on the disparity information on the pixels in the distance calculation area R11.

The distance calculation area R11 is a rectangular area as shown in FIG. 5. The distance calculation area R11 in this embodiment is set in such a way that the following areas, each of which is a part of the pixel area PX1 extracted by the first extraction unit 5, are included: an area PX11 corresponding to the body, an area PX12 corresponding to the upper part of the leg, and an area PX13 corresponding to the upper arm. The distance calculation area R11 1 is set in such a way that the central part of the pixel area PX1 temporarily determined as a pedestrian, or the central part of the target candidate, is included. The distance calculation area R11 in this embodiment is set in such a way that the background area PX2 of the pixel area PX1 is included in at least a part thereof.

The distance identification unit 6 calculates the distance between the stereo camera imaging device 2 and the imaging object, temporarily determined as a pedestrian, from the disparity values of the pixels in the distance calculation area R11. The distance identification unit 6 calculates the representative distance as a value that represents the distance between the stereo camera imaging device 2 and the target candidate temporarily determined as a pedestrian. The value of the disparity between a pixel in the right image data DR and a pixel in the left image data DL corresponds to the distance between the imaging object of the pixel and the stereo camera imaging device 2. For example, the distance identification unit 6 calculates the median or the average of the disparities of the pixels, included in the distance calculation area R11, as the representative disparity. This representative disparity corresponds to the representative distance between the target candidate and the stereo camera imaging device 2. The distance identification unit 6 may output the representative disparity value directly as the value corresponding to the representative distance or may convert the representative disparity to a distance and then output the representative distance. The distance identification unit 6 in this embodiment calculates the representative distance L0 and outputs the calculated representative distance L0 to the extraction range setting unit 7. The larger the distance between the stereo camera imaging device 2 and the target candidate is, the smaller the disparity value is. Conversely, the smaller the distance is, the larger the disparity value is. Therefore, when the distance identification unit 6 outputs the representative disparity value as a value corresponding to the representative distance L0, the processing by the extraction range setting unit 7 and so on should be performed based on the above-described correlation between the disparity value and the distance.

The extraction range setting unit 7 sets a range that is included in the main area R1 and is used for extracting an actual target. First, the problem that arises when a target is extracted based on the disparity is described with reference to FIG. 6. To extract the shape of a solid object from the image data obtained by the stereo camera imaging device 2, the solid object and its background must be separated. For a solid object that contacts the road surface such as a pedestrian, the separation between the legs that are near the road surface and the road surface is more difficult than the separation between the upper half of the body and the background.

As shown in FIG. 6, the distance L1 from the stereo camera imaging device 2 to a pedestrian PE to be extracted (pedestrian PE1, PE2) differs from the distance (L1 + L2) from the stereo camera imaging device 2 to the background (for example, road surface). This difference allows the pedestrian PE1 and the pedestrian PE2 to be extracted based on the disparity between the two pieces of image data DR and DL. However, when extracting a part that is a part of the pedestrian PE (PE1, PE2) and is near the road surface (for example, the legs of the pedestrian PE), the difference L2 between the road surface and the legs is small. This small difference tends to decrease extraction accuracy. In addition, in the case of the pedestrian PE2 positioned distant from the stereo camera imaging device 2, the distance L1 to the extraction target is large. Therefore, as compared with the case in which the pedestrian PE1 positioned nearer is extracted, this large distance (L1) makes it more difficult to separate the feet of the pedestrian PE2 from the background, sometimes resulting in extracting a shape different from the real shape. For example, when extracting the feet of the pedestrian PE2, the extraction is susceptible to a noise caused by the road surface shape.

To address this problem, the image processing device 100 in this embodiment changes the vertical-direction ranges, which are used for extracting the shape of a solid object, according to the distance to a target candidate as described below. Changing the vertical-direction ranges in this manner enables the shape of a target candidate to be extracted accurately, resulting in a reduction in accuracy when a candidate for a distant target is extracted. With reference to FIG. 7 and FIG. 8, the following describes how the extraction range setting unit 7 sets the ranges.

As shown in FIG. 7, the following two areas are defined in the main area R1: extraction permission area R12 and extraction inhibition area R13. The extraction permission area R12 is an area in which the extraction of a candidate area PX3 (see FIG. 10), which will be described later, from the image data DR and DL is permitted. On the other hand, the extraction inhibition area R13 is an area in which the extraction of the candidate area PX3 from the image data DR and DL is inhibited. The extraction permission area R12 and the extraction inhibition area R13 are separated by a boundary line LB. The boundary line LB, which is an example indicating a predetermined position, is a straight line in this embodiment. The boundary line LB, which indicates a predetermined position, is a position that is set as the reference position. The boundary line LB is a line that is determined by the vertical-direction width hp from the upper end R1a of the main area R1. In other words, the boundary line LB is a line which is below the upper end of the frame of the main area R1 and the distance of which from the upper end R1a is hp. The extraction permission area R12 is an area on the upper end R1a side of the boundary line LB. That is, the extraction permission area R12 is an upper part area in which the upper part above the boundary line LB, which is the reference position, is captured. On the other hand, the extraction inhibition area R13 is the area on the opposite side of the upper end R1a side with respect to the boundary line LB. The extraction inhibition area R13 is a lower part area in which the lower part below the boundary line LB, which is the reference position, is captured. That is, in this embodiment, the extraction of the candidate area PX3 from the extraction inhibition area R13, which is an area in the main area R1 and in which the lower part below the boundary line LB is captured, is inhibited.

The extraction range setting unit 7 sets the extraction permission area R12 by referring to the map shown in FIG. 8. The horizontal axis in FIG. 8 indicates the distance d between the stereo camera imaging device 2 and the target candidate, and the vertical axis indicates the height h. The height h is not the distance in the image but is the actual height. That is, the height h indicates the length at the position in the actual space where there is the target candidate. The frame of the extraction permission area R12 is determined according to the height h. For example, if the value of the distance d from the stereo camera imaging device 2 to the target candidate is d1, h1 is selected as the value of the height h. The extraction range setting unit 7 converts the height h to the length in the image according to the distance d to the target candidate to determine the vertical width hp of the extraction permission area R12 shown in FIG. 7. The extraction range setting unit 7 sets an area, which is included in the main area R1 and the width of which from the upper end R1a is hp, as the extraction permission area R12.

As shown in FIG. 8, when the distance d from the stereo camera imaging device 2 to a target candidate is large, the height h is smaller than the height h when the distance d is small. That is, when the distance (representative distance L0) identified by the distance identification unit 6 is large, the predetermined height position (boundary line LB) is positioned on the vertically upper side of the target candidate than the predetermined height position when the representative distance L0 is small. In this embodiment, the larger the value of the representative distance L0 is, the closer to the upper end of the pedestrian is the boundary line LB set. On the other hand, the smaller the value of the representative distance L0 is, the relatively closer to the lower end of the pedestrian the boundary line LB is set.

Therefore, when the same target candidate is extracted, the aspect ratio of the extraction permission area R12 changes in this embodiment according to the representative distance L0. The more distant a target is from the vehicle 1, the smaller is the area in which the target is captured in the image. Therefore, the more distant the target is, the smaller is the size of the main area R1. In this embodiment, the vertical-direction width hp of the extraction permission area R12 is reduced at a reduction rate higher than the reduction rate at which the main area R1 is reduced when the distance to a target becomes large. Therefore, the nearer the target candidate is to the stereo camera imaging device 2, the thinner the extraction permission area R12 becomes in the vertical direction. On the other hand, the more distant the target candidate is, the smaller does the ratio of the vertical frame width hp to the horizontal frame width of the extraction permission area R12 become.

The value of the height h, which depends on the distance d, may be determined experimentally in advance. For example, for a combination of the height from the road surface to the stereo camera imaging device 2, distance d, and height h, the extraction accuracy of target extraction is evaluated based on the experimental result. As a result, the map shown in FIG. 8 is created based on the maximum value of the height h that can achieve the extraction accuracy permissible when extracting a target at the position of the distance d.

The second extraction unit 8 extracts the candidate area PX3, which is the image area of a target candidate, from the main area R1 based on the disparity. The second extraction unit 8 separates the target candidate and the background based on the disparity values of the pixels in the extraction permission area R12. The extraction method used by the second extraction unit 8 to extract a target candidate is described below with reference to FIG. 9.

From the extraction permission area R12, the second extraction unit 8 extracts an area, where the distance between the imaging object and the stereo camera imaging device 2 is within a predetermined range of the distance identified by the distance identification unit 6 (representative distance L0), as a candidate area. For example, if the distance from the stereo camera imaging device 2 is within a range of a predetermined distance σ of the representative distance L0 in the depth direction as shown in FIG. 9, the distance is considered to be within a predetermined range. In FIG. 9, the area corresponding to the extraction permission area R12 is indicated by the arrow.

If a pixel is included in the extraction permission area R12 and its distance corresponding to the disparity value is within a predetermined range of the representative distance L0, the pixel is determined to be a pixel in which the target candidate is captured. More specifically, for each pixel in the extraction permission area R12, the second extraction unit 8 converts the disparity value of the pixel to the distance LP from the stereo camera imaging device 2. The second extraction unit 8 determines that, if the calculated distance LP below satisfies expression (1) below, the pixel is a pixel in the candidate area.

$$L0 - \sigma \le LP \le L0 + \sigma \ldots (1)$$

As shown in FIG. 10, the candidate area PX3 is extracted in the extraction permission area R12, but not in the extraction inhibition area R13. In this manner, the image processing device 100 in this embodiment can extract the candidate area PX3 of a target by limiting to the area where the extraction accuracy based on the disparity is relatively high. As a result, the extraction accuracy of extracting a target area is increased. Therefore, the image processing device 100 in this embodiment reduces the loss in the determination accuracy when pattern matching is performed based on the candidate area PX3.

The object determination unit 9 compares the shape of the candidate area PX3 with the shape of a predefined target to determine whether the image of the candidate area PX3 is the image of the target. The object determination unit 9 in this embodiment performs comparison via pattern matching. The ECU 3 stores the shape of a pedestrian as the shape of the target in advance. The ECU 3 stores the shapes of a plurality of pedestrians having different facing directions, poses, and physiques. The object determination unit 9 performs pattern matching between these stored shapes and the shape of the candidate area PX3. Based on the result of comparison between the shape of the candidate area PX3 and the stored shapes, the object determination unit 9 determines whether the candidate area PX3 is the image of a pedestrian. In this embodiment, an area which is in the main area R1 and in which the lower part below the boundary line LB, indicating a predetermined position, is captured (that is, an area in which the extraction accuracy is relatively low) is the extraction inhibition area R13. That is, the extraction of the candidate area PX3 from the extraction inhibition area R13 is restricted more strictly than the extraction of the candidate area PX3 from the extraction permission area R12 in which the upper part above the boundary line LB, which is the reference position, is captured. This reduces the possibility that a low-accuracy extraction result is included in the candidate area PX3, allowing the object determination unit 9 to perform high-accuracy pattern matching.

The operation of the image processing device 100 in this embodiment is described below with reference to FIG. 1. The control flow shown in FIG. 1 is executed repeatedly, for example, at a predetermined periodic interval. First, in step S1, the stereo camera imaging device 2 captures two images at the same time. The ECU 3 sends commands to the right-side camera 2R and the left-side camera 2L to cause them to capture the image at the same time. The ECU 3 acquires the right image data DR from the right-side camera 2R and the left image data DL from the left-side camera 2L. These two pieces of image data are captured at the same time in response to the command. After step S 1 is performed, the processing proceeds to step S2.

In step S2, the disparity calculation unit 4 calculates the disparity. The disparity calculation unit 4 calculates the disparity between the right image data DR and the left image data DL through the stereo disparity processing as described above by referring to FIG. 4. The disparity calculation unit 4 calculates the disparity value for the pixels in the image data DR and DL and outputs the disparity information, which indicates the relation between the address of each pixel and the disparity value of the pixel, to the distance identification unit 6. After step S2 is performed, the processing proceeds to step S3.

In step S3, the first extraction unit 5 extracts the main area R1. The first extraction unit 5 extracts the main area R1 as described above by referring to FIG. 5. The first extraction unit 5 outputs the information on the extracted main area R1 (for example, the information indicating the address of the main area R1) to the distance identification unit 6. After step S3 is performed, the processing proceeds to step S4.

In step S4, the distance identification unit 6 calculates the distance to the detection object detected as a candidate for a pedestrian. The distance identification unit 6 sets the median of the disparity values, calculated for the pixels in the distance calculation area R11, as the distance from the stereo camera imaging device 2 to the detection object as described above by referring to FIG. 5. The distance identification unit 6 outputs the calculated distance (representative distance L0) to the extraction range setting unit 7. After step S4 is performed, the processing proceeds to step S5.

In step S5, the extraction range setting unit 7 sets the range in which the contour shape can be detected. The extraction range setting unit 7 sets the range in step S5 based on the value of the representative distance L0 calculated by the distance identification unit 6. For example, the extraction range setting unit 7 sets the extraction permission area R12 as described above by referring to FIG. 7 and FIG. 8. The extraction range setting unit 7 outputs the information on the extraction permission area R12 that has been set (for example, the information on the address of the extraction permission area R12) to the second extraction unit 8. After step S5 is performed, the processing proceeds to step S6.

In step S6, the second extraction unit 8 extracts the contour shape using the disparity in the range that is set in step S5. The second extraction unit 8 extracts the candidate area PX3 from the extraction permission area R12 based on the disparity data on the pixels in the extraction permission area R12 that is set in step S5. For example, as described with reference to FIG. 9, the second extraction unit 8 classifies the pixels, which are included in the extraction permission area R12 and the distance of which from the stereo camera imaging device 2 to the imaging object is within a predetermined distance $\sigma$ of the representative distance L0, as the pixels of the candidate area PX3. The second extraction unit 8 checks all pixels in the extraction permission area R12 to determine whether each pixel is a pixel in the candidate area PX3.

After the candidate area PX3 is determined, the second extraction unit 8 extracts the contour shape of the candidate area PX3. For example, a pixel, which is one of the pixels on each row in the candidate area PX3 and is at the end of continuous pixels, is determined to be a pixel that forms the contour. Similarly, a pixel, which is one of the pixels on each column in the candidate area PX3 and is at the end of continuous pixels, is determined to be a pixel that forms the contour. The second extraction unit 8 outputs the extracted contour shape to the object determination unit 9. After step S6 is performed, the processing proceeds to step S7.

In step S7, the object determination unit 9 determines whether the contour shape is that of a pedestrian. The object determination unit 9 performs pattern matching between the contour shape, extracted by the second extraction unit 8, and a pre-stored pedestrian model. For pattern matching with the model, the object determination unit 9 increases or decreases the size of the contour shape so that the scale of the extracted contour shape matches the scale of the model. For example, the object determination unit 9 may perform this determination via Support_Vector_Machines (SVM) by replacing the part of Histogram_of_oriented_gradient (HOG) of the method, described in N.DalalandB.Triggs,"Histogram of oriented gradient for human detection", CVPR,2005, with a binary image.

The object determination unit 9 determines whether the contour shape, extracted in step S6, is the shape of a pedestrian and outputs the determination result. After step S7 is performed, the control flow is terminated.

As described above, the image processing device 100 in this embodiment restricts the extraction of the candidate area PX3 as follows. That is, with the boundary line LB as the predetermined position in the main area R1, the image processing device 100 restricts the extraction of the candidate area PX3 from the area (extraction inhibition area R13), in which the lower part below the boundary line LB is captured, more strictly than the extraction of the candidate area PX3 from the area (extraction permission area R12) in which the upper part above the predetermined position is captured. In this embodiment, the degree of restriction on the extraction of the candidate area PX3 is the maximum in the extraction inhibition area R13 and, in this area, the extraction of the candidate area PX3 is inhibited. In this way, this method efficiently reduces the loss in the extraction accuracy of the candidate area PX3.

In the image processing device 100 in this embodiment, the boundary line LB when the distance (representative distance L0) identified by the distance identification unit 6 is large is set at an upper position in the main area R1 than when the distance is small. This is implemented by the following two, (i) and (ii). (i) The height h, shown in FIG. 8, is set lower when the representative distance L0 is large than when the representative distance L0 is small. (ii) Because the height h is set lower, the boundary line LB moves to a relatively upper side in the main area R1 and, as a result, the extraction inhibition area R13 is extended to the upper side.

The ECU 3 in this embodiment may further include a support unit that supports the driver's driving operation. The support unit supports the driver based on the determination result in step S7. The support method includes a pedestrian's presence transmission method performed by the information transmission unit that transmits the pedestrian's presence information to a driver and a driving operation support method performed by the operation support unit. The pedestrian's presence transmission method includes the transmission of an alert or a warning to a driver based on the relative position and the relative speed between a detected pedestrian and the vehicle 1 as well as the suggestion of the avoidance operation for avoiding an approach to a pedestrian. The driving operation support method includes the avoidance of an approach to a detected pedestrian by assisting a driver in performing the input operation for the driving source (engine, motor generator, etc.), the brake device, and the steering device. The ECU 3, which has the support unit, can function as a control device that controls the vehicle 1.

According to the image processing device 100 in this embodiment, the candidate area PX3 is extracted by narrowing a candidate to an image area (extraction permission area R12) where the candidate can be extracted accurately, based on the distance to the extracted pedestrian candidate. Therefore, when the candidate for a pedestrian is distant from the vehicle 1, the upper part of the pedestrian (for example, the head or the upper half of the body) is extracted as the candidate area PX3. Even when a pedestrian is distant from the vehicle, the upper part of the pedestrian can be accurately extracted because the disparity with the background is relatively large. By pattern performing matching with a pedestrian model based on the candidate area PX3 that is accurately extracted as described above, the image processing device 100 can accurately determine whether the candidate area PX3 is a pedestrian. That is, from the time a pedestrian is distant from the vehicle, the presence of the pedestrian can be determined accurately. In addition, inhibiting the lower part of a pedestrian from being extracted reduces the possibility that a low-accuracy extraction result is included in the candidate area PX3. Therefore, this method reduces the possibility that, though actually a pedestrian, the candidate area PX3 is incorrectly determined not to be a pedestrian.

As the distance between the vehicle 1 and a pedestrian becomes smaller, the extraction permission area R12 is extended in the main area R1 in the direction of the lower end of the pedestrian. Therefore, as the vehicle 1 approaches the pedestrian, it becomes possible to extract the candidate area PX3 that includes a larger part of the pedestrian. This ability allows the more detailed information on the pedestrian, such as the facing direction and the pose of the pedestrian, to be obtained through pattern matching. For example, it becomes possible to determine not only whether the extracted candidate is actually a pedestrian but also whether the pedestrian is a child or whether the pedestrian is crossing the road in front of the vehicle 1. This detailed information enables the pedestrian to be classified more accurately.

(Image processing method) An image processing method is disclosed in the first embodiment. The image processing method includes the following procedures: a capturing procedure for capturing the image of the surroundings; a first extraction procedure for extracting a main area that is an image area including a target candidate based on the image data captured by the capturing procedure; a disparity calculation procedure for calculating the disparity based on the image data captured by the capturing procedure; a second extraction procedure for extracting a candidate area, which is the image area of the candidate, from the main area; and an object determination procedure for determining whether the image of the candidate area is the image of a target based on a comparison between the shape of the candidate area and the shape of the predetermined target. The extraction of the candidate area from the area, which is in the main area and in which the lower part below the predetermined position is captured, is restricted more strictly than the extraction of the candidate area from the area in which the upper part above the predetermined position is captured.

The capturing procedure is performed, for example, by the stereo camera imaging device 2. The first extraction procedure is performed, for example, by the first extraction unit 5. The disparity calculation procedure is performed, for example, by the disparity calculation unit 4. The second extraction procedure is performed, for example, by the second extraction unit 8. The object determination procedure is performed, for example, by the object determination unit 9.

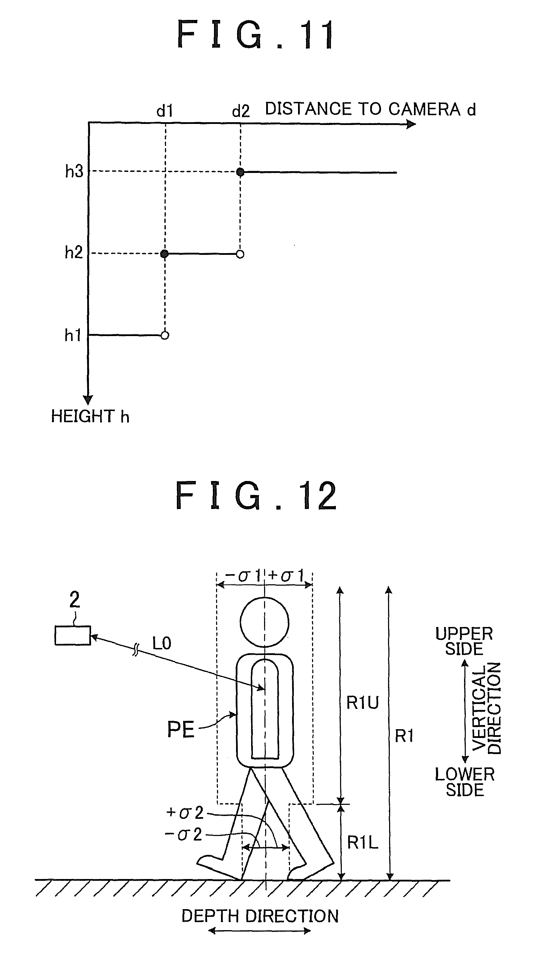

[Modification of first embodiment] A modification of the first embodiment is described below. FIG. 11 is a diagram showing the determination method of an extraction permission area in the modification of the first embodiment. In the first embodiment described above, as the distance d between the stereo camera imaging device 2 and a target candidate becomes larger, the height h that determine the extraction permission area R12 is decreased continuously. This modification differs from the first embodiment described above in that the height h that determines the extraction permission area R12 is changed in stages.

As shown in FIG. 11, the thresholds d1 and d2 are defined for the distance d. The first threshold d1 is smaller in value than the second threshold d2. When the distance d is smaller than the first threshold d1, the height h that determines the extraction permission area R12 is the first height h1. When the distance d is equal to or larger than the first threshold d1 and smaller than the second threshold d2, the height h that determines the extraction permission area R12 is the second height h2. When the distance d is equal to or larger than the second threshold d2, the height h that determines the extraction permission area R12 is the third height h3. In the description above, the second height h2 is smaller than the first height h1, and the third height h3 is smaller than the second height h2.

In this modification, the height h that determines the extraction permission area R12 is changed in three stages. Instead of this, the height h that determines the extraction permission area R12 may be changed in two stages or in four or more stages.

[Second embodiment] A second embodiment is described below with reference to FIG. 12. In the second embodiment, the same reference numeral is used to denote an element that has the same function as that described in the first embodiment, and the further description of that element will be omitted. FIG. 12 is a diagram showing the extraction method of a candidate area in the second embodiment. The second embodiment differs from the first embodiment described above in that the extraction of the candidate area PX3 is permitted in the lower part of the pedestrian PE. In the first embodiment described above, the extraction of the candidate area PX3 is permitted only in the area which is included in the main area R1 and in which the upper part above the predetermine position is captured. Alternatively, in the second embodiment, the extraction of the candidate area PX3 is permitted also in the area in which the lower part below the predetermined position is captured. However, as described below, the extraction condition for extracting the candidate area PX3 is restricted in the area in which the lower part is captured.

As shown in FIG. 12, the main area R1 is divided into the following two areas in this embodiment: upper part area R1U and the lower part area R1L. The main area R1 in FIG. 12 represents an image generated by projecting the main area R1 in the right image data DR and DL onto the actual space position. The upper part area R1U is an area which is included in the main area R1 and in which the vertically upper side above the predetermined position is captured. On the other hand, the lower part area R1L is an area which is included in the main area R1 and in which the vertically lower side below the predetermined position is captured. The boundary line between the upper part area R1U and the lower part area R1L is determined in the same manner as for the boundary line LB in the first embodiment described above.

As shown in FIG. 12, the first predetermined distance $\sigma1$, the predetermined distance $\sigma$ for the upper part area R1U, is larger than the second predetermined distance $\sigma2$, the predetermined distance $\sigma$ for the lower part area R1L. That is, in the upper part area R1U, even if the distance difference of a pixel from the representative distance L0 is relatively large, the pixel is determined to be a pixel that configures the candidate area PX3. For example, for a pixel in the upper part area R1U, even if the difference between the distance LP, from the imaging object of the pixel to the stereo camera imaging device 2, and the representative distance L0 exceeds the second predetermined distance $\sigma2$ but if the distance is equal to or smaller than the first predetermined distance $\sigma1$, the pixel is determined to configure the candidate area PX3.

On the other hand, for a pixel in the lower part area R1L, if the difference between the distance LP, from the imaging object of the pixel to the stereo camera imaging device 2, and the representative distance L0 exceeds the second predetermined distance $\sigma2$, the pixel is not determined to be a pixel in which the target candidate is captured. For the upper part area R1U, the second extraction unit 8 extracts the candidate area PX3 based on the first predetermined distance $\sigma1$. On the other hand, for the lower part area R1L, the second extraction unit 8 extracts the candidate area PX3 based on the second predetermined distance $\sigma2$. The other operations of the image processing device 100 are the same as those in the first embodiment described above.

In this embodiment, the predetermined distance $\sigma$ differs between the upper part and the lower part of the main area R1 as described above. The predetermined range (range of $\pm\sigma2$) for the lower part area R1L, which is included in the main area R1 and in which the lower part below the predetermined position is captured, is smaller than the predetermined range (range of $\pm\sigma1$) for the upper part area R1U in which the upper part above the predetermined position is captured. This difference in the predetermined ranges ($\pm\sigma2$ and $\pm\sigma1$) restricts the extraction of the candidate area PX3 from the lower part area R1L more strictly than the extraction of the candidate area PX3 from the upper part area R1U. Therefore, when extracting the lower part of the pedestrian PE, this embodiment reduces the possibility that the background, such as the road surface, is incorrectly detected as a part of the pedestrian PE.

In addition, the second predetermined distance σ2 changes in this embodiment according to the distance identified by the distance identification unit 6. The second predetermined distance σ2 when the representative distance L0 from the stereo camera imaging device 2 to the pedestrian PE is large is smaller than the second predetermined distance σ2 when the representative distance L0 is small. That is, the degree of restriction on the extraction of the candidate area PX3 from the lower part area R1L when the distance (representative distance L0) identified by the distance identification unit 6 is large is set higher than the degree of restriction on the extraction of the candidate area PX3 from the lower part area R1L when the distance is small. In other words, the error range of the distance or disparity, which is allowed when the candidate area PX3 is determined to be the image of a pedestrian in the lower part area R1L, is set smaller when the pedestrian PE is distant from the vehicle than when the pedestrian PE is near the vehicle. This means that, when the pedestrian PE is distant from the vehicle, the degree of restriction on the extraction of the candidate area PX3 in the lower part area R1 L is increased.

When the representative distance L0 becomes larger and, as a result, the second predetermined distance σ2 is set smaller, the divergence between the first predetermined distance σ1 and the second predetermined distance σ2 is increased. That is, the degree of divergence between the predetermined range (range of ±σ2) for the lower part area R1L and the predetermined range (range of ±σ1) for the upper part area R1U becomes larger when the representative distance L0 is large than when the representative distance L0 is small. Therefore, considering the characteristics of the stereo camera method that tends to decrease in extraction precision as the distance to the object becomes larger, the extraction condition for the lower part area R1L when the detection object is distant from the vehicle can be made stricter.

A change in the second predetermined distance σ2 according to a change in the representative distance L0 may be made continuously or in stages. When the representative distance L0 is a distance equal to or larger than a predetermined value, the second predetermined distance σ2 may be set to 0. When second predetermined distance σ2 is set to 0, the candidate area PX3 almost similar to that in the first embodiment described above can be obtained.

In the second embodiment, the boundary line between the upper part area R1U and the lower part area R1L may be set at a fixed point regardless of the representative distance L0. In addition, the main area R1 may be divided into three or more areas in the vertical direction. In this case, it is desirable that the value of the predetermined distance σ be largest in the uppermost area and that the value of the predetermined distance σ be decreased as the area is lower.

In addition, the second embodiment may be performed in combination with the first embodiment. For example, the upper part area R1U and the lower part area R1L similar to those in the second embodiment may be provided in the extraction permission area R12. This configuration inhibits the candidate area PX3 from being extracted in the extraction inhibition area R13 and, in the extraction permission area R12, restricts the extraction of the candidate area PX3 in an area in which a relatively lower part is captured.

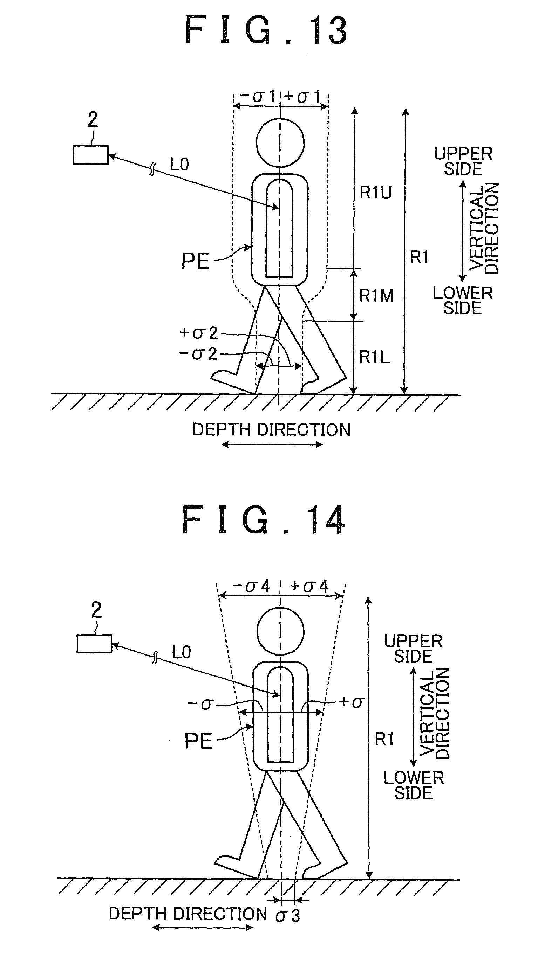

[First modification of second embodiment] A first modification of the second embodiment is described below. FIG. 13 is a diagram showing the extraction method of a candidate area in the first modification of the second embodiment. As shown in FIG. 13, the main area R1 in the first modification is divided into the following three areas: upper part area R1U, intermediate area R1M, and lower part area R1L. The upper part area R1U is an area in which the uppermost side of the main area R1 in the vertical direction is captured. The lower part area R1L is an area in which the lowermost side of the main area R1 in the vertical direction is captured. The intermediate area R1M is an area in the main area R1 between the upper part area R1U and the lower part area R1L.

As shown in FIG. 13, the first predetermined distance σ1, the predetermined distance σ of the upper part area R1U, and the second predetermined distance σ2, the predetermined distance σ of the lower part area R1L, are each a fixed value. In contrast, the predetermined distance σ of the intermediate area R1M changes according to a position in the vertical direction. In this embodiment, the predetermined distance σ of the intermediate area R1M becomes smaller as the position is lower in the vertical position. In addition, in the intermediate area R1M, the predetermined distance σ at the boundary with the upper part area R1U is the first predetermined distance σ1. Similarly, in the intermediate area R1M, the predetermined distance σ at the boundary with the lower part area R1L is the second predetermined distance σ2. That is, the predetermined distance σ is continuous at the boundaries of the areas R1U, R1L, and R1M.

According to this modification, the predetermined distance σ can be changed, as necessary, according to the vertical-direction distance from the contact surface such as the road surface. This allows the extraction condition to be changed according to the ease with which the disparity between the pedestrian PE and the background is obtained, thereby reducing the loss in extraction accuracy. It is also possible to change the second predetermined distance σ2 according to the representative distance L0 in the same manner as when the predetermined distance σ of the intermediate area R1M is changed. In addition, when the representative distance L0 is equal to or larger than a predetermined distance, the second predetermined distance σ2 may be set to 0. It is also possible to change the position of the intermediate area R1M according to the representative distance L0. For example, when the representative distance L0 is large, the intermediate area R1M may be positioned higher than when the representative distance L0 is small.

In addition, this modification may be performed in combination with the first embodiment. For example, the upper part area R1U, the intermediate area R1M, and the lower part area R1 L, such as those used in this modification, may be provided in the extraction permission area R12.

[Second modification of second embodiment] A second modification of the second embodiment is described below. FIG. 14 is a diagram showing the extraction method of a candidate area in the second modification of the second embodiment. As shown in FIG. 14, the predetermined distance σ changes continuously from the upper end side to the lower end side of the main area R1. The value of the predetermined distance σ is larger in a part of the main area R1 in which the relatively upper side is captured and is smaller in a part of the main area R1 in which the relatively lower side is captured. Changing the value of the predetermined distance σ in this way restricts the extraction of the candidate area PX3 more strictly at a lower position where it becomes more difficult to separate the background and the pedestrian PE based on the disparity.

For example, the value of the predetermined distance σ changes linearly according to a position in the vertical direction as shown in FIG. 14. The value of the predetermined distance σ may be changed, not linearly, but along a curve that bends in the depth direction according to a position in the vertical direction.

In this modification, the minimum value σ3 of the predetermined distance σ is variable. The value of the minimum value σ3 changes according to the representative distance L0. The minimum value σ3 when the representative distance L0 is large is smaller than the minimum value σ3 when the representative distance L0 is small. That is, the more distant the pedestrian PE is from the vehicle 1, the smaller the minimum value σ3 is. On the other hand, the maximum value σ4 of the predetermined distance σ is constant. The more distant the pedestrian PE is from the vehicle 1, the smaller the minimum value σ3 is. Therefore, the more distant the pedestrian PE is from the vehicle 1, the more difficult it becomes to extract the feet of the pedestrian PE as the candidate area PX3. In addition, the more distant the pedestrian PE is from the vehicle 1, the higher the area, where it is difficult to extract it as the candidate area PX3, is extended upwards in the pedestrian PE. When the representative distance L0 is equal to or larger than a predetermined distance, the minimum value σ3 may be set to 0.

In addition, this modification may be performed in combination with the first embodiment described above. For example, the predetermined distance σ may be decreased in the extraction permission area R12 as the position becomes lower.

[Modifications of above embodiments] Although mounted on the vehicle 1 in the first embodiment and the second embodiment described above, the image processing device 100 need not always be mounted on the vehicle 1. The image processing device 100 may be mounted on a moving body other than a vehicle or on a structure other than a moving object. The image processing device 100 may be handled singly as a unit. The image processing device 100 may be configured by a special device or at least a part of its components may be configured by general-purpose components. For example, the stereo camera imaging device 2 may be configured by a combination of two general-purpose cameras. Instead of the ECU 3, a general-purpose computer (for example, a PC) may be used. The stereo camera imaging device 2 may capture a stereo image, not with two cameras, but with one camera.

Although the area in front of the vehicle 1 is captured by the stereo camera imaging device 2 in the embodiments and the modifications described above, the capturing direction is not limited to the front. For example, the stereo camera imaging device 2 may capture an image at the side or in the back of the vehicle 1. Instead of calculating the distance from the imaging device to a candidate for a target based on the disparity, the distance identification unit 6 may identify the distance to a candidate for a target with a distance information acquisition unit such as a radar detector.

Although the target to be determined through pattern matching is typically a pedestrian, other targets may also be a target to be determined. Other targets include moving objects, which move in the traffic environment around the vehicle, such as a preceding vehicle and a bicycle. Other targets may also include fixed objects such as a telegraph pole or a pole.

The contents disclosed in the embodiments and the modifications described above may be performed as necessary in any combination.

**Claims**

1. An image processing device (100) **characterized by** comprising:

   an imaging device (2) configured to capture an image of surroundings;
   a first extraction unit (5) configured to extract a main area based on image data captured by the imaging device, the main area being an image area including a candidate for a target;
   a disparity calculation unit (4) configured to calculate a disparity based on image data captured by the imaging device;
   a second extraction unit (8) configured to extract a candidate area from the main area based on the disparity, the candidate area being an image area of the candidate; and
   an object determination unit (9) configured to determine whether an image of the candidate area is an image of the target by comparing a shape of the candidate area and a predetermined shape of the target, wherein an extraction of the candidate area from a lower part area in the main area is restricted more strictly than an extraction of the candidate area from an upper part area in the main area, the lower part area constitutes a lower part of the main area and is provided below a predetermined position in the main area, and the upper part area constitutes an upper part of the main area and is provided above the predetermined position in the main area.

2. The image processing device (100) according to claim 1, wherein the predetermined position is a position that is set as a reference position.

3. The image processing device (100) according to claim 2, further comprising a distance identification unit (6) configured to identify a distance from the imaging device to the candidate for the target, wherein the second extraction unit is configured to extract only a part of the main area as the candidate area, in the part of the main area, the distance between the candidate for the target and the imaging device is within a predetermined range with respect to the distance identified by the distance identification unit (6), and the predetermined range of the lower part area is smaller than the predetermined range of the upper part area.

4. The image processing device (100) according to claim 3, wherein a degree of divergence between the predetermined range of the lower part area and the predetermined range of the upper part area is larger when the distance identified by the distance identification unit (6) is large than when the distance is small.

5. The image processing device (100) according to claim 2, further comprising a distance identification unit (6) configured to identify a distance from the imaging device to the candidate for the target, wherein in the main area, the reference position when the distance identified by the distance identification unit (6) is large is set above the reference position when the distance is small.

6. The image processing device (100) according to claim 2, further comprising a distance identification unit (6) configured to identify a distance from the imaging device to the candidate for the target, wherein a degree of restriction on the extraction of the candidate area from the lower part area when the distance identified by the distance identification unit is large is set higher than a degree of restriction on the extraction of the candidate area from the lower part area when the distance is small.

7. The image processing device (100) according to claim 5 or 6, wherein the second extraction unit (8) is configured to extract only a part of the main area as the candidate area, in the part of the main area, the distance between the candidate for the target and the imaging device (2) is within a predetermined range with respect to the distance identified by the distance identification unit (6), and the predetermined range of the lower part area is smaller than the predetermined range of the upper part area.

8. The image processing device (100) according to claim 7, wherein a degree of divergence between the predetermined range of the lower part area in the main area and the predetermined range of the upper part area is larger when the distance identified by the distance identification unit (6) is large than when the distance is small.

9. The image processing device (100) according to any one of claims 1 to 8, wherein an extraction of the candidate area is inhibited in the lower part area.

10. The image processing device (100) according to claim 2, further comprising a distance identification unit (6) configured to identify a distance from the imaging device (2) to the candidate for the target, wherein the second extraction unit (8) is configured to extract a part of the main area as the candidate area, in the part of the main area, the distance between the candidate for the target and the imaging device is within a predetermined range with respect to the distance identified by the distance identification unit (6), and an extraction of the candidate area is inhibited in the lower part area.

11. The image processing device (100) according to any one of claims 1 to 10, further comprising an extraction range setting unit (7) configured to restrict the extraction of the candidate area from the lower part area is restricted more strictly than the extraction of the candidate area from the upper part area.

12. The image processing device (100) according to any one of claims 1 to 11, wherein the first extraction unit (5) is configured to extract a candidate for a pedestrian as the candidate for the target.

**13.** An image processing method **characterized by** comprising:

capturing an image of surroundings to generate image data;

extracting a main area based on the image data, the main area being an image area including a candidate for a target;

calculating a disparity based on the image data;

extracting a candidate area from the main area based on the disparity, the candidate area being an image area of the candidate;

determining whether an image of the candidate area is an image of the target by comparing a shape of the candidate area and a predetermined shape of the target; and

restricting an extraction of the candidate area from a lower part area in the main area more strictly than an extraction of the candidate area from an upper part area in the main area, wherein

the lower part area constitutes a lower part of the main area and is provided below a predetermined position in the main area, and

the upper part area constitutes an upper part of the main area and is provided above the predetermined position in the main area.

# FIG. 1

```
        ( START )

                              S1
CAPTURE TWO IMAGES AT THE
SAME TIME WITH STEREO CAMERA

                              S2
CALCULATE DISPARITY THROUGH
STEREO DISPARITY PROCESSING

                              S3
DETECT PEDESTRIAN CANDIDATE
FROM ONE PRE-SET IMAGE THROUGH
PATTERN MATCHING

                              S4
CALCULATE DISTANCE FROM
DISPARITY OF PIXELS IN PEDESTRIAN
CANDIDATE AREA

                              S5
SET RANGE, IN WHICH
CONTOUR SHAPE CAN BE DETECTED,
BASED ON DISTANCE

                              S6
EXTRACT CONTOUR SHAPE
USING DISPARITY OF PIXELS IN RANGE
THAT HAS BEEN SET

                              S7
PERFORM MATCHING BETWEEN
EXTRACTED CONTOUR SHAPE AND
PRE-STORED MODEL TO DETERMINE
WHETHER CONTOUR SHAPE
IS SHAPE OF PEDESTRIAN

        ( END )
```

# FIG.2

STEREO CAMERA IMAGING DEVICE — 2

}100

3

DISPARITY CALCULATION UNIT — 4

FIRST EXTRACTION UNIT — 5

DISTANCE IDENTIFICATION UNIT — 6

EXTRACTION RANGE SETTING UNIT — 7

SECOND EXTRACTION UNIT — 8

OBJECT DETERMINATION UNIT — 9

# FIG.3

# FIG. 4

LEFT IMAGE DATA DL

BK

PX

RIGHT IMAGE DATA DR

Smax

VERTICAL DIRECTION

BK0

BKC

HORIZONTAL DIRECTION

Smax

BKC

BK0

BKC

Smax

BK0

BKC

Smax

BK0

FIG.5

DR

R1

PX1

R11

PX13

PX11
PX2
PX12

UPPER
SIDE

VERTICAL
DIRECTION

LOWER
SIDE

HORIZONTAL
DIRECTION
LEFT SIDE ←——→ RIGHT SIDE

FIG.6

2

PE1(PE)

PE2(PE)

UPPER
SIDE

VERTICAL
DIRECTION

L1

L1

L2

L1

L2

LOWER
SIDE

DEPTH DIRECTION

# FIG.7

R12    R1a

R1

PX1

LB

R13

UPPER
SIDE

VERTICAL
DIRECTION

hp

LOWER
SIDE

HORIZONTAL
DIRECTION
LEFT SIDE ←————→ RIGHT SIDE

# FIG.8

d1    DISTANCE TO CAMERA d

h1

HEIGHT h

# F I G . 9

DEPTH DIRECTION

# F I G . 10

HORIZONTAL DIRECTION
LEFT SIDE ←→ RIGHT SIDE

# FIG. 11

d1        d2   DISTANCE TO CAMERA d

h3

h2

h1

HEIGHT h

# FIG. 12

2

$-\sigma 1$ $+\sigma 1$

L0

PE

$+\sigma 2$
$-\sigma 2$

R1U

R1

R1L

UPPER SIDE

VERTICAL DIRECTION

LOWER SIDE

DEPTH DIRECTION

# F I G . 13

DEPTH DIRECTION

# F I G . 14

DEPTH DIRECTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007280088 A